# EUROPÄISCHE PATENTSCHRIFT

(11) **EP 3 157 720 B1**
(45) Veröffentlichungstag und Bekanntmachung des Hinweises auf die Patenterteilung: **06.02.2019**
(21) Anmeldenummer: 15732208.2
(22) Anmeldetag: 23.06.2015
(51) Int. Cl.: B28C 5/42, E04G 21/04, B60P 3/16

(54) **FAHRMISCHERPUMPE**
TRUCK MIXER CONCRETE PUMP
CAMION MIXO-POMPE

(30) Priorität: 23.06.2014 DE 102014211992
(43) Veröffentlichungstag der Anmeldung: 26.04.2017
(73) Patentinhaber: Putzmeister Engineering GmbH, 72631 Aichtal (DE)
(72) Erfinder: FÜGEL, Dietmar, 72649 Wolfschlugen (DE)
(74) Vertreter: Pfiz, Thomas
(86) Internationale Anmeldenummer: PCT/EP2015/064039
(87) Internationale Veröffentlichungsnummer: WO 2015/197576

(56) Entgegenhaltungen:
- CN-Y- 201 092 281
- DE-A1-102007 060 526
- DE-A1-102008 005 009

## Beschreibung

Die Erfindung betrifft eine Fahrmischerpumpe mit einem Fahrzeugchassis und einem auf dem Fahrzeugchassis angeordneten Fahrzeugaufbau, der einen Aufbaurahmen und darauf angeordnet einen Mastbock für einen Materialverteilermast, eine Mischertrommel mit einem in Fahrtrichtung gesehen vorderen und einem hinteren Trommelauflagerbock sowie eine einen Motor und Getriebe aufweisende Antriebseinheit für die Mischertrommel aufweist. Die Fahrmischerpumpe ist üblicherweise auf einem Fahrgestell mit mindestens zwei Achsen aufgebaut. Um die Last der Mischertrommel und des Mastarmes in den Rahmen des Fahrgestells abzuleiten, wird ein Hilfsrahmen, der sogenannte Aufbaurahmen, verwendet, auf dem dann die verschiedenen Hilfsaufbauten wie vorderer Trommelauflagerbock, hinterer Trommelauflagerbock und Mastbock für den Betonverteilermast aufgesetzt sind. Die Befestigung des Aufbaurahmens am Rahmen des Fahrgestells erfolgt beispielsweise durch Schraubverbindungen oder durch Aufschweißen. Die bekannten Aufbaurahmen bestehen aus einem Rechteckrohr oder aus einem C-Profil mit eingeschweißten Verstärkungsblechen. Diese Bauweise weist ein die Nutzlast einschränkendes, hohes Gewicht auf, um bei der Verbindung der verschiedenen Bauteile die erforderliche Stabilität erreichen zu können. Hinzu kommt, dass der Trommelhersteller und der Hersteller der Pumpen und/oder des Betonverteilermastes unterschiedliche Firmen sein können. Die Hersteller der Fahrmischerpumpen fertigen diese in der Regel nach Kundenwunsch hinsichtlich des zu verwendenden Fahrzeugchassis, das regelmäßig nicht von dem Hersteller der Fahrmischerpumpe selbst hergestellt wird. Dies führt dazu, dass der Aufbaurahmen für die Mischertrommel und weitere Komponenten jeweils spezifisch für das verwendete Fahrzeugchassis hergestellt werden muss. Hierdurch entsteht ein erheblicher Mehraufwand bei der Montage.

DE 10 2008 005009 A1 offenbart eine Fahrmischerpumpe nach dem Oberbegriff des Anspruch 1.

Ausgehend hiervon, besteht die Aufgabe der vorliegenden Erfindung darin, eine Fahrmischerpumpe der eingangs genannten Art bereitzustellen, die einen geringeren Fertigungsaufwand erfordert und eine höhere Nutzlast ermöglicht.

Zur Lösung dieser Aufgabe wird die in Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, dass eine Gewichtseinsparung und ein geringerer Fertigungsaufwand dann erreicht werden können, wenn die erforderlichen Komponenten wie Aufbaurahmen, Mastbock und Trommelauflagerböcke zu einer vorgefertigten Baueinheit zusammengefasst werden. Erfindungsgemäß ist daher vorgesehen, dass der Aufbaurahmen als vorgefertigte Baueinheit einschließlich des Mastbocks und der vorderen und hinteren Trommelauflagerböcke ausgebildet ist.

Gemäss der Erfindung weist der Aufbaurahmen ein sich zwischen dem Mastbock und dem hinteren Trommelauflagerbock erstreckendes Blechbiegeteil auf, das zwei in Richtung des Fahrzeugchassis weisende Längsholme zur Befestigung an dem Fahrzeugchassis aufweist. Die Längsholme des Blechbiegeteils können dann mit dem Fahrzeugchassis verschraubt, vernietet oder verschweißt werden. Hierzu können die Längsholme des Blechbiegeteils insbesondere mit einer Vielzahl von in vorbestimmten Abständen angeordneten, ein Lochraster bildenden Durchbrechungen versehen sein. Diese Durchbrechungen ermöglichen dann eine Verschraubung mit entsprechenden Durchbrechungen im Fahrzeugchassis, wobei das Lochraster die Verschraubung mit unterschiedlich gestalteten Fahrzeugchassis erlaubt.

In weiter bevorzugter Ausgestaltung der Erfindung weist der Aufbaurahmen eine in den hinteren Trommelauflagerbock integrierte Abstützeinrichtung zur Abstützung der Fahrmischerpumpe am Boden auf. Die bisher separat hergestellte und montierte hintere Abstützeinrichtung kann somit ebenfalls in den Aufbaurahmen integriert werden, was zu einer weiteren Gewichtseinsparung bei gleichzeitig verbesserter Abstützwirkung führt. Die Geometrie der Abstützeinrichtung kann dabei verschiedene Varianten aufweisen, beispielsweise senkrecht oder schräg zum Boden ausfahrbare Stützfüße, oder zur Verbreiterung der Abstützbasis seitlich und senkrecht ausfahrbare Stützfüße. Insbesondere kann die Abstützeinrichtung beidseitig zur Längsmittelachse des Fahrzeugs jeweils eine Hülsenpartie und ein aus der Hülsenpartie teleskopierbares Abstützelement als Stützfuß aufweisen, wobei vorteilhaft zwischen den Hülsenpartien eine Querstrebe als Versteifungselement angeordnet sein kann. Weiterhin kann an der Abstützeinrichtung eine Abschleppöse angeordnet sein, da die Abstützeinrichtung eine für ein Abschleppen des gesamten Fahrzeugs hinreichende Stabilität aufweist.

Ebenso kann der Aufbaurahmen eine in den Mastbock in den Betonverteilermast integrierte Abstützeinrichtung zur Abstützung der Fahrmischerpumpe am Boden aufweisen, also eine in Fahrtrichtung gesehen am vorderen Ende des Aufbaurahmen angeordnete Abstützeinrichtung. Auch dies führt zu einer Gewichtseinsparung und verbesserter Stabilität der Abstützung.

Die Dickstoffpumpe der Fahrmischerpumpe ist zweckmäßig im Heckbereich des Fahrzeugchassis angeordnet und kann als Rotorpumpe oder Kolbenpumpe mit Längs- oder quer zur Fahrzeuglängsachse ausgerichteten Förderzylindern ausgebildet sein. Soweit die Dickstoffpumpe als Kolbenpumpe mit längs zur Fahrzeuglängsachse ausgerichteten Förderzylindern ausgebildet ist, kann der hintere Trommelauflagerbock in vorteilhafter Ausgestaltung der Erfindung eine Durchtrittsöffnung für die Förderzylinder der Pumpe aufweisen.

In vorteilhafter Ausgestaltung der Erfindung ist der Aufbaurahmen aus einer Mehrzahl von miteinander verschweißten und/oder verschraubten Blechen, Blechbiegeteilen und/oder Metallprofilteilen gebildet. Auf diese Weise kann eine vergleichsweise komplexe Form des Aufbaurahmens mit einer Mindestanzahl von Einzelteilen gefertigt werden.

Um den Aufbaurahmen mit Fahrzeugchassis unterschiedlicher Längen verwenden zu können, ist in vorteilhafter Ausgestaltung der Erfindung vorgesehen, dass der Aufbaurahmen eine zwischen dem Mastbock und dem vorderen Trommelauflagerbock angeordnete Trennstelle aufweist. Die zur Aufnahme eines eine Rahmenverlängerung bewirkenden Zwischenstücks vorbestimmter Länge ausgebildet ist. Alternativ kann die Trennstelle auch als teleskopierbare, in vorbestimmten Abständen fixierbare Rahmenpartie ausgebildet sein.

Um eine einfache Reinigung der Fahrmischerpumpe nach einem Baustelleneinsatz zu ermöglichen, ist regelmäßig ein druckbeaufschlagter Wassertank vorgesehen, der eine im Wesentlichen tonnenförmige Gestalt aufweist. Dieser Wassertank kann platzsparend an den Aufbaurahmen montiert werden, wenn der Mastbock des Aufbaurahmens eine Ausnehmung zur Aufnahme des Wassertanks aufweist, die diesen ganz oder teilweise umschließt. Vorteilhaft ist der Wassertank in Fahrtrichtung gesehen im hinteren Bereich des Mastbocks angeordnet und die Ausnehmung zu seiner Aufnahme randoffen ausgebildet.

Zusätzlich und ergänzend zu den vorstehenden Ausführungen ist anzumerken, dass vorbekannte Fahrmischer als getrennte Einzelkomponenten einen Mastbock, einen vorderen Trommelauflagerbock und einen hinteren Trommelauflagerbock aufweisen. Diese drei Komponenten sind dabei auf einen am Fahrzeugchassis angeordneten Aufbaurahmen aufgeschraubt oder an diesen angeschweißt. Die hintere Abstützung ist nochmals separat am Fahrzeugchassis angebracht. Da es sich um Einzelkomponenten handelt, gibt es zwischen jeder Komponente und einer anderen eine Trennstelle. Jede Trennstelle bedingt zusätzliches Gewicht und Montageaufwand. Der Kraftfluss zwischen den Komponenten wird ebenfalls durch jede Trennstelle behindert, wodurch diese jeweils massiver ausgeführt werden müssen, als aus Gewichtsgründen wünschenswert ist. Bei dem vorliegenden Integralrahmen hingegen sind alle vorstehend genannten Komponenten in eine untrennbar miteinander verbundene Stahlbaugruppe vereint. Die hintere Abstützung wird nicht mehr am Fahrzeugrahmen bzw. -chassis angebracht, sondern ist ebenfalls in den Integralrahmen integriert. Durch den Entfall der Trennstellen können der Kraftfluss und das Gewicht optimiert werden. Alle Komponenten sind unabhängig vom Fahrzeugchassis, also auch von denen unterschiedlicher Hersteller, und das Fahrzeugchassis an sich muss keine Stützkraft zwischen der vorderen und der hinteren Abstützung übertragen, es hängt gleichsam als Ballast unter dem Integralrahmen. Der Integralrahmen kann als Schweißkonstruktion auch dahingehend optimiert werden, dass über die Verbindung mit dem Fahrzeugchassis dessen Verwindungsneigung reduziert und eine bessere Geländegängigkeit des Fahrzeugs erreicht wird. Bei vorbekannten Fahrmischern hat man beobachtet, dass sich das Fahrzeug auf Baustellen so stark verwindet, dass es zu Kollisionen zwischen dem Armpaket (Knickmast) für die Betonförderleitung und der Mischertrommel kommt. Wenn die Verwindungsneigung des Fahrzeugchassis reduziert ist, können eventuell noch auftretende, sehr geringe Verwindungen des Chassis auch nicht schädlich auf den Integralrahmen zurückwirken, so dass eine beispielsweise in der DE 10 2010 051 111 A1 beschriebene, elastisch formschlüssige Trennstelle vermieden werden kann. Der vorliegende Integralrahmen bildet hinsichtlich des Kraftflusses geometrisch eine Kreuzstruktur, mit den vier Bodenaufsetzstellen jeweils am Ende eines Kreuzarms. Soweit oben die Möglichkeit der Längenanpassung des Integralrahmens genannt ist, versteht es sich dabei, dass die Zwischenstücke und/oder Verschraubungen die tragende Funktion des Rahmens weiterhin gewährleisten und nicht lediglich einer Anpassung weiterer anmontierter Baugruppen, beispielsweise an eine Betonpumpe, geschuldet sind.

Im Folgenden wird die Erfindung anhand der in der Zeichnung in schematischer Weise dargestellten Ausführungsbeispiele näher erläutert. Es zeigen
- Fig. 1: eine perspektivische Ansicht einer Fahrmischerpumpe mit einem Aufbaurahmen, in den die Trommelauflagerböcke, der Mastbock, sowie die vordere und die hintere Abstützeinrichtung integriert sind;
- Fig. 2: eine perspektivische Ansicht des Aufbaurahmens;
- Fig. 3: der Aufbaurahmen gemäß Fig. 2 mit einer daran montierten Dickstoffpumpe;
- Fig. 4a bis f: perspektivische Ansichten eines Ausführungsbeispiels des Aufbaurahmens, bei dem eine Trennstelle vorgesehen ist und eine Rahmenverlängerung durch Einsetzen von Zwischenstücken an der Trennstelle möglich ist;
- Fig. 5a und b: perspektivische Ansichten eines Ausführungsbeispiels des Aufbaurahmens, bei dem eine teleskopierbare Trennstelle zur Ermöglichung einer Rahmenverlängerung vorgesehen ist.
- Fig. 6: eine perspektivische Ansicht des Heckbereichs einer Fahrmischerpumpe mit einer in den hinteren Trommelauflagerbock integrierten Abstützeinrichtung;
- Fig. 7 bis 9: drei Ansichten des Hecks einer Fahrmischerpumpe mit Varianten einer in den hinteren Trommelauflagerbock integrierten Abstützeinrichtung.

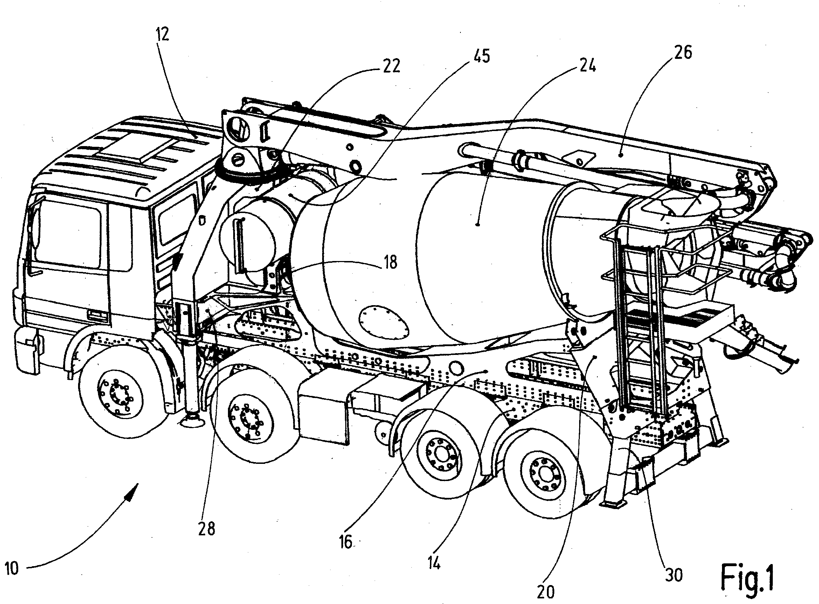

Die in Fig. 1 dargestellte Fahrmischerpumpe 10 besteht im Wesentlichen aus einem Fahrzeug 12 mit einem Chassis 14, einem auf dem Chassis 14 angeordneten Aufbaurahmen 16 mit vorderen und hinteren Trommelauflagerböcken 18, 20 und einem Mastbock 22, einer Mischertrommel 24 und einem Betonverteilermast 26, vorderen und hinteren Abstützeinrichtungen 28, 30, sowie weiteren für den Betrieb der Fahrmischerpumpe erforderlichen Komponenten.

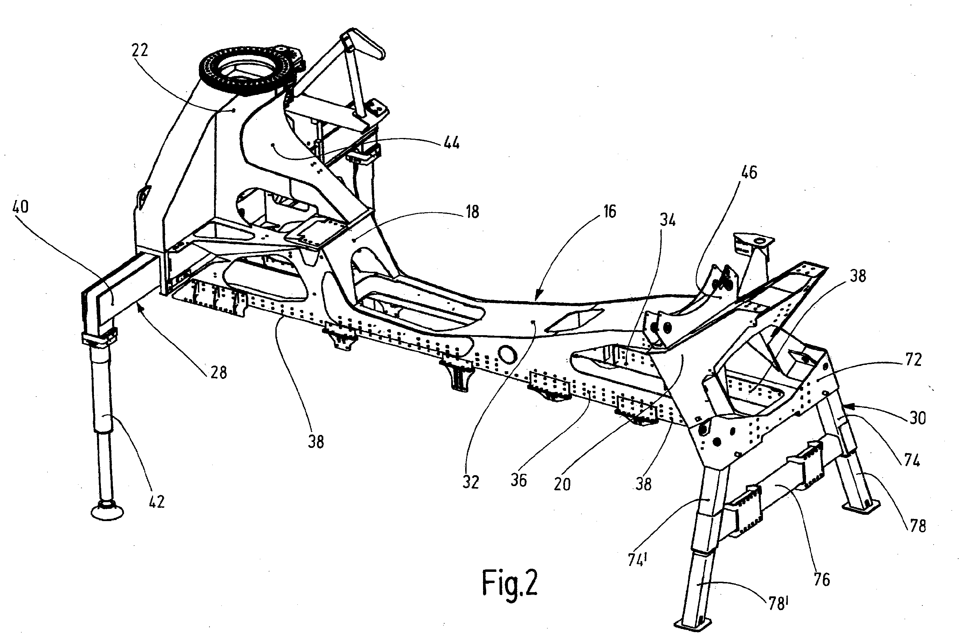

Fig. 2 zeigt eine perspektivische Ansicht eines ersten Ausführungsbeispiels des Aufbaurahmens 16. Der Aufbaurahmen 16 weist ein sich in Fahrzeuglängsrichtung zwischen dem Mastbock 22 und dem hinteren Trommelauflagerbock 20 erstreckendes Mittelteil 32 auf, das als Blechbiegeteil ausgebildet ist und das zwei Längsholme 34, 36 aufweist, die die Verbindungsglieder zum Fahrzeugchassis 14 darstellen. Hierzu weisen die Längsholme 34, 36 eine Vielzahl von ein Lochraster bildenden Durchbrechungen 38 auf. Die Durchbrechungen 38 werden bei der Montage des Aufbaurahmens 16 auf dem Fahrzeugchassis 14 mit entsprechenden Durchbrechungen im Fahrzeugchassis 14 zur Deckung gebracht und ermöglichen so eine Verschraubung der zwei Komponenten aneinander. Je nach Gestaltung des Fahrzeugchassis, beispielsweise hinsichtlich seiner Länge, kommen unterschiedliche Untergruppen der Durchbrechungen 38 zum Einsatz. Das Mittelteil 32 ist im Wesentlichen als nach unten offenes Kastenprofil ausgebildet, wobei die Längsholme 34, 36 durch eine Mehrzahl von Verbindungsstücken oder Querstegen miteinander verbunden sind. Das Mittelteil 32 ist überwiegend als einstückiges Blechbiegeteil ausgebildet. Im vorderen Bereich des Aufbaurahmens 16 ist der Mastbock 22 für den Betonverteilermast angeordnet und mit dem Mittelteil verschweißt oder verschraubt. Der Mastbock 22 ist wie das Mittelteil 32 aus einer Mehrzahl von Blechen zusammengesetzt. In den unteren Bereich des Mastbocks 22 ist die Abstützvorrichtung 28 integriert. Die vordere Abstützvorrichtung 28 weist ausschiebbare, gegebenenfalls auch teleskopierbare, Stützbeine 40 und sich von diesen aus teleskopierbar zum Boden erstreckende Stützfüße 42 auf. Der Mastbock 22 weist eine nach hinten weisende, randoffene Ausnehmung 44 auf, die zwischen dem Mastbock 22 und der Mischertrommel 24 bzw. dem vorderen Trommellager Raum für die Anordnung eines Wassertanks 45 (Fig.1) schafft.

Am rückwärtigen Ende des Aufbaurahmens 16 ist der Trommelauflagerbock 20 angeordnet. Der Trommelauflagerbock 20 trägt das hintere Trommellager 46. Weiterhin ist die hintere Abstützvorrichtung 30 an dem hinteren Trommelauflagerbock 20 angeordnet.

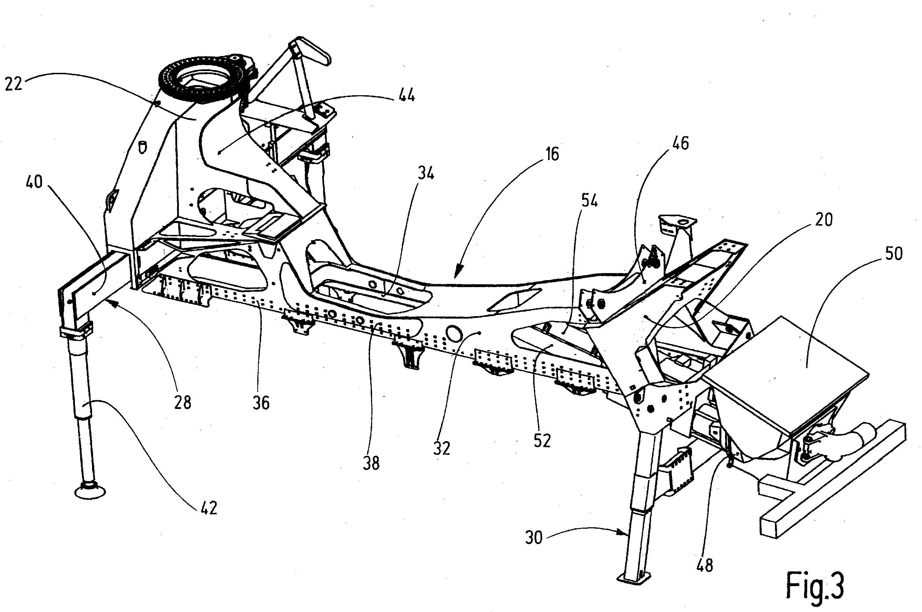

Fig. 3 zeigt den Aufbaurahmen 16 gemäß Fig. 2, wobei hier im hinteren Bereich des Rahmens eine Dickstoffpumpe 48 mit einem Materialaufgabebehälter 50 angeordnet ist. Die Pumpe 48 ist als Kolbenpumpe ausgebildet und weist zwei Förderkolben 52, 54 auf, die sich in Längsrichtung zwischen den Seitenholmen 34, 36 des Mittelteils 32 des Aufbaurahmens 16 erstrecken.

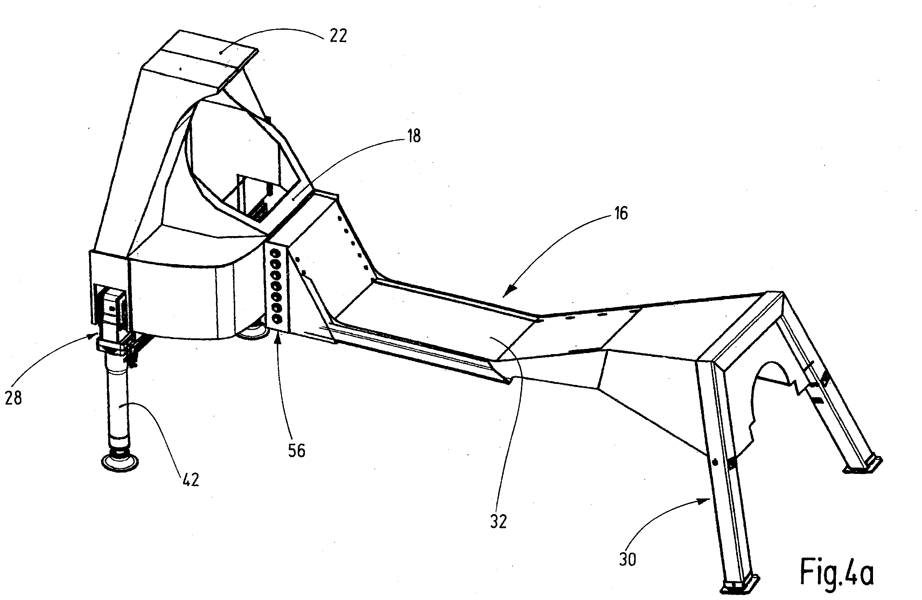

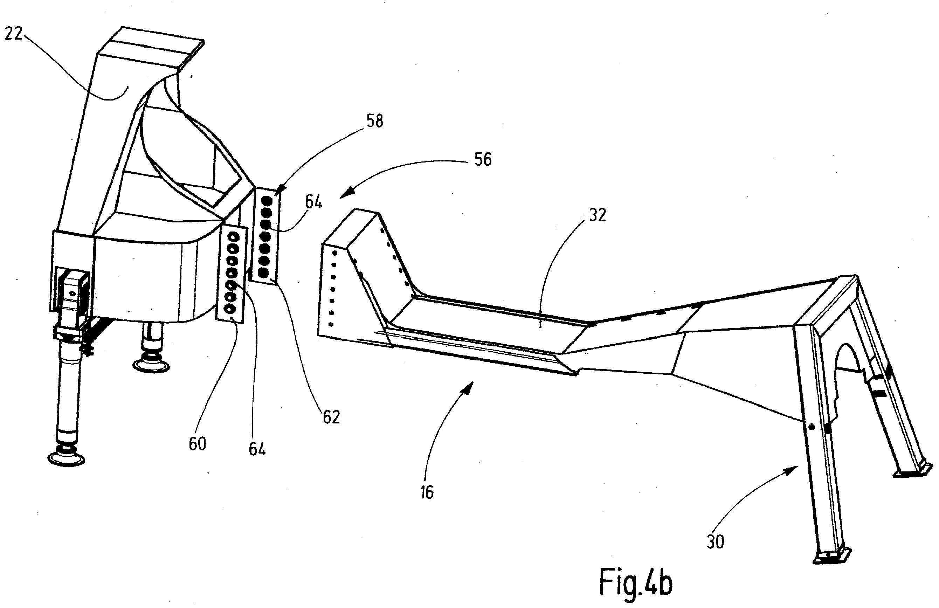

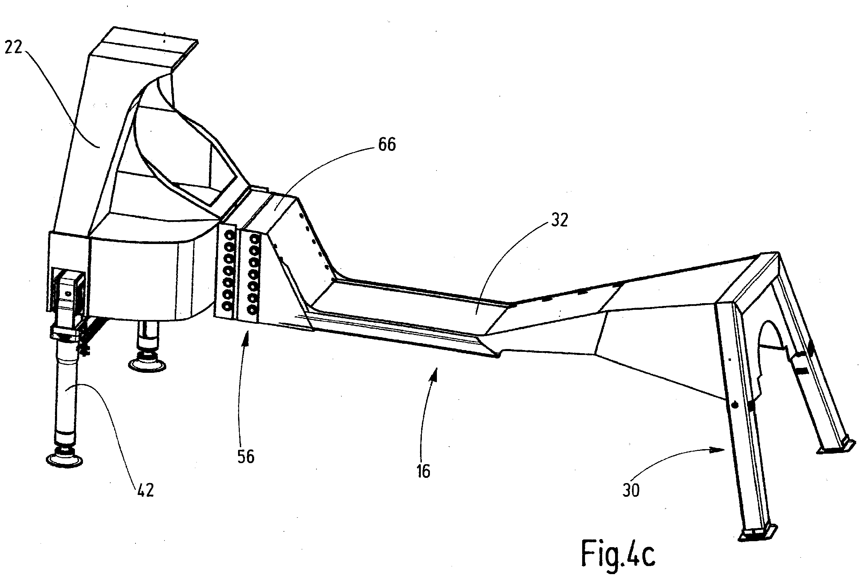

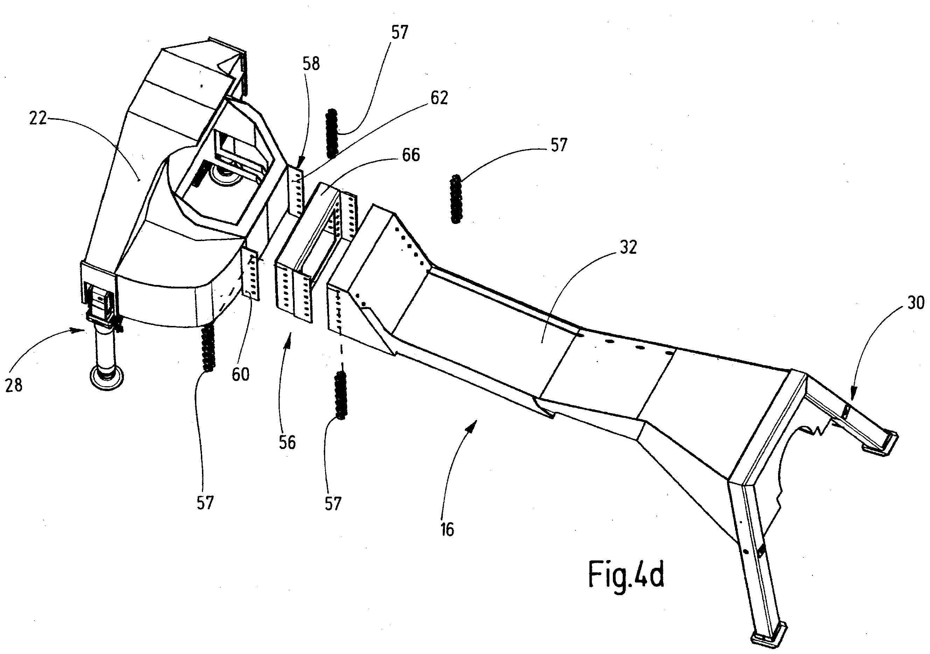

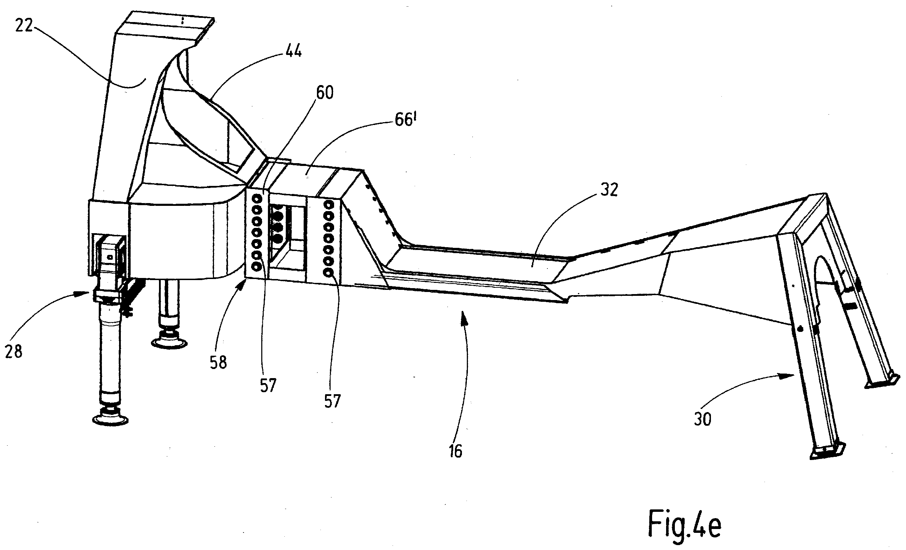

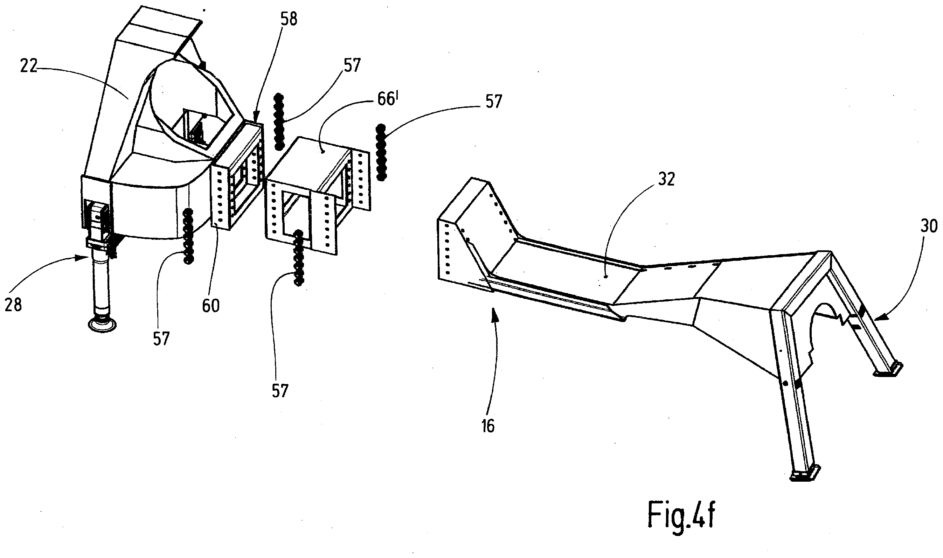

Fig. 4 ist eine vereinfachte Darstellung eines Ausführungsbeispiels des Aufbaurahmens 16 mit einer Trennstelle 56, die im hinteren Bereich des vorderen Trommelauflagerbocks 18 angeordnet ist. Fig. 4a zeigt die kürzeste Variante dieser Ausführungsform in zusammengebautem Zustand. Fig. 4b zeigt die Trennstelle im geöffneten Zustand. An dem vorderen Trommelauflagerbock 18 ist ein C-Profil 58 befestigt, z. B. angeschweißt. Das C-Profil weist zwei seitliche Schenkel 60, 62 jeweils mit einer Mehrzahl von Durchbrechungen 64 auf. Das Mittelteil 32 des Aufbaurahmens 16 weist im Bereich der Trennstelle 56 eine korrespondierende Anzahl von Durchbrechungen auf, so dass die zwei Teile mit Schraubbolzen 57 miteinander verbunden werden können.

Fig. 4c und 4d zeigen den Aufbaurahmen 16 mit einem ersten, in die Trennstelle 56 eingesetzten Verlängerungsstück 66. Das Verlängerungsstück 66 ist im Wesentlichen als Kastenprofil ausgebildet und weist einerseits Durchbrechungen zur Befestigung an dem C-Profil 58 und andererseits Seitenlaschen zur Befestigung mit dem vorderen Ende des Mittelteils 32 des Aufbaurahmens 16 auf. Die Fig. 4e und 4f entsprechen den Fig. 4c und 4d, nur dass hier ein längeres Verlängerungsstück 66' in die Trennstelle 56 eingesetzt ist. Die Verlängerungsstücke 66, 66' und gegebenenfalls weitere sind so gestaltet, dass eine Rahmenverlängerung in einem bestimmten Rastermaß, beispielsweise 10 cm, 20 cm usw. ermöglicht wird. Die entsprechenden Bauteile können dann zur Anpassung des Aufbaurahmens an unterschiedliche Fahrzeugchassis bevorratet werden.

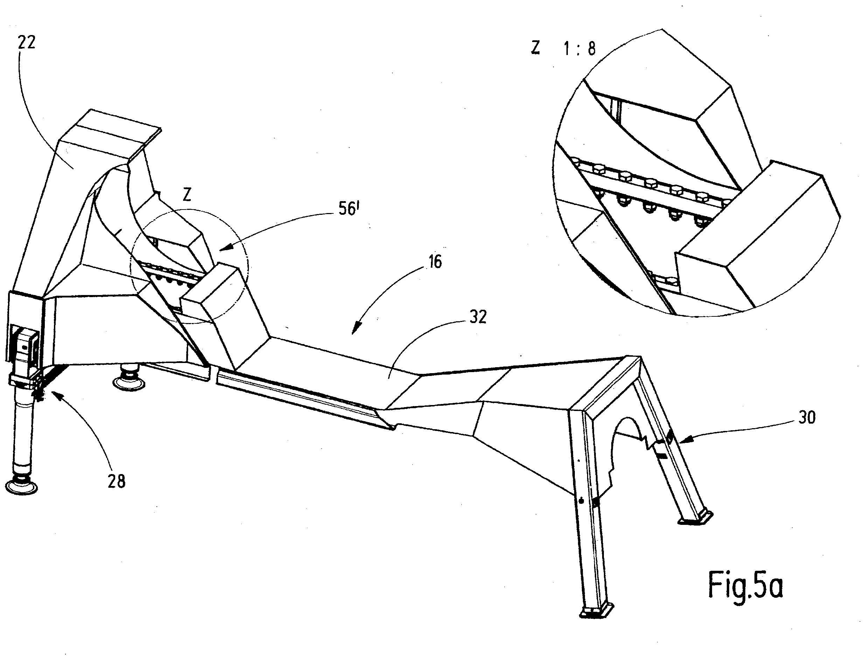

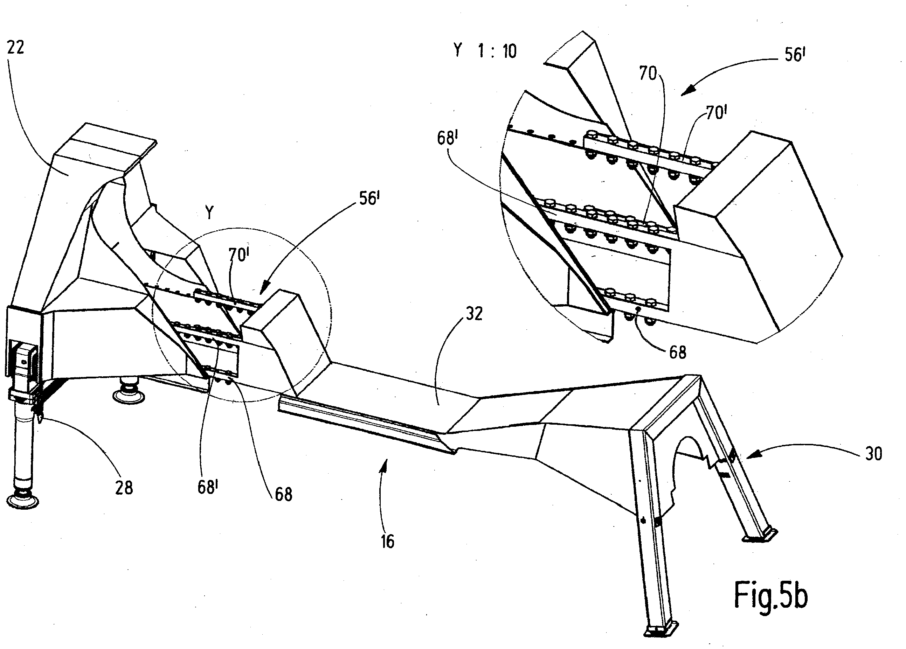

Die Fig. 5a und 5b zeigen eine Ausführungsform des Aufbaurahmens mit Trennstelle 56', bei der die Rahmenverlängerung bei Bedarf nicht durch den Einsatz von Zwischenstücken erreicht wird, sondern dadurch, dass die Trennstelle 56' teleskopierbar ausgebildet ist. Hierzu sind auf beiden Seiten der Stirnseite des Mittelteils 32 des Aufbaurahmens 16 jeweils obere und untere Verbindungsstreben 68, 68', 70, 70' angeordnet. Der Mastbock 22 weist eine zur Rückseite hin offene Ausnehmung auf, in der die Verbindungsstreben 68, 68', 70, 70' längs verschiebbar aufgenommen sind und wiederum mit einer Mehrzahl von Schraubbolzen in der gewünschten Längenstellung befestigt werden können.

Beide Varianten der Trennstelle 56, 56' sind derart dimensioniert und ausgeführt, dass die Tragfähigkeit und Verwindungssteifigkeit des Aufbaurahmens 16 hierdurch nicht beeinträchtigt wird.

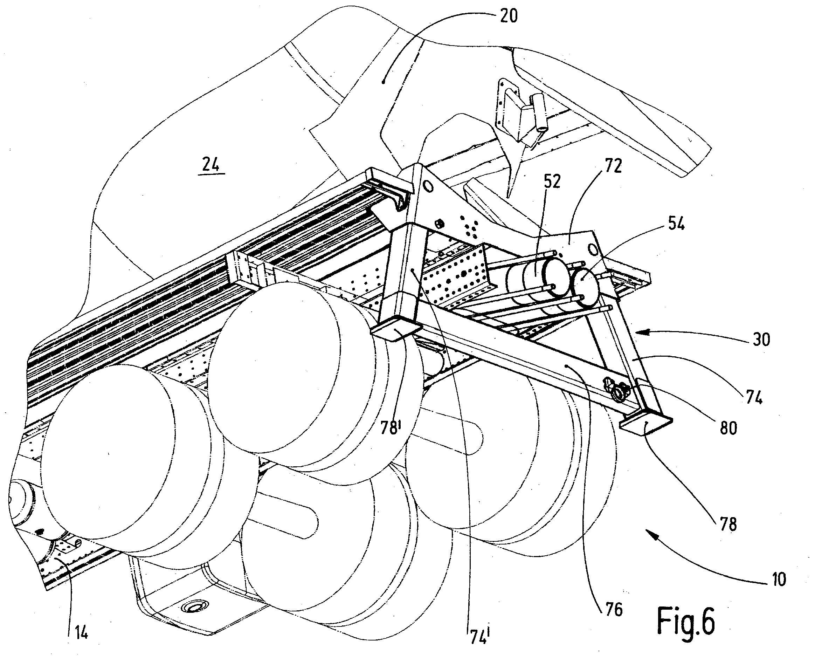

Fig. 6 zeigt eine perspektivische Ansicht des Heckbereichs einer Fahrmischerpumpe 10 mit einer in den hinteren Trommelauflagerbock 20 integrierten Abstützeinrichtung 30. Die Abstützeinrichtung 30 besteht im Wesentlichen aus einer Rahmenpartie, die durch einen Querbalken 72 und zwei endseitig daran angeordneten, sich schräg in Bodenrichtung erstreckenden Hülsenpartien 74, 74', die im Bereich ihres bodenseitigen Endes durch eine Querstrebe 76 miteinander verbunden sind. In den als Vierkantrohr ausgebildeten Hülsenpartien 74, 74' ist jeweils ein als Stützfuß ausgebildetes Abstützelement 78, 78' verschiebbar angeordnet, in Fig. 6 in einer eingezogenen Transportstellung und beispielsweise in Fig. 2 in einer ausgefahrenen Abstützstellung. Der Querbalken 72 bildet hier gleichzeitig den hinteren Querträger des Fahrzeugchassis 14, der anderenfalls die Einbaulage der Förderkolben 52, 54 stören würde. Weiterhin ist an der Querstrebe 76 der Abstützeinrichtung 30 eine Abschleppöse 80 angeordnet, die so besser zugänglich ist als bei einer Anordnung am Fahrzeugchassis 14. Durch den steifen Verbund aus der Abstützeinrichtung 30 und dem hinteren Trommelauflagerbock 20 bzw. dem integrierten Aufbaurahmen 16 ist die erforderliche Belastbarkeit gewährleistet.

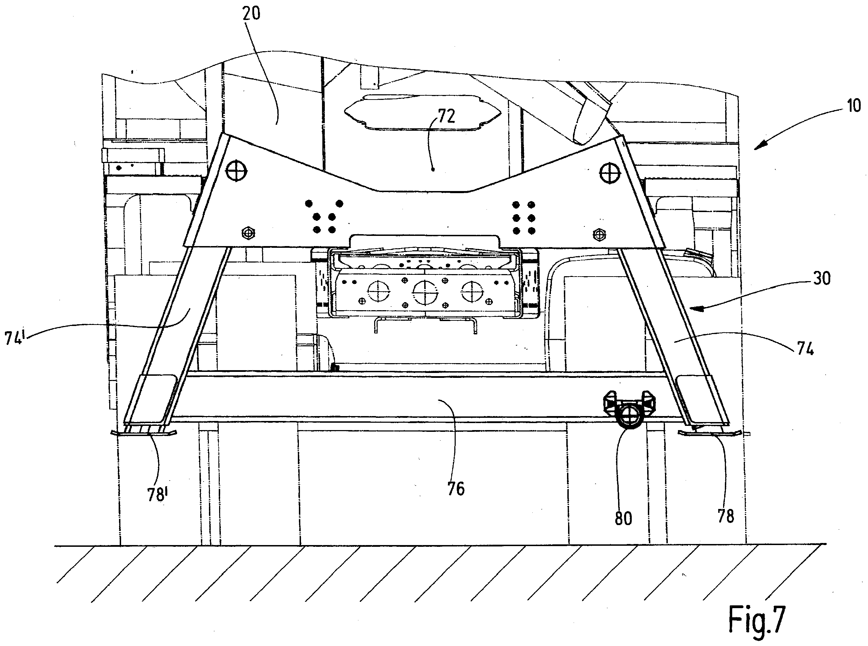

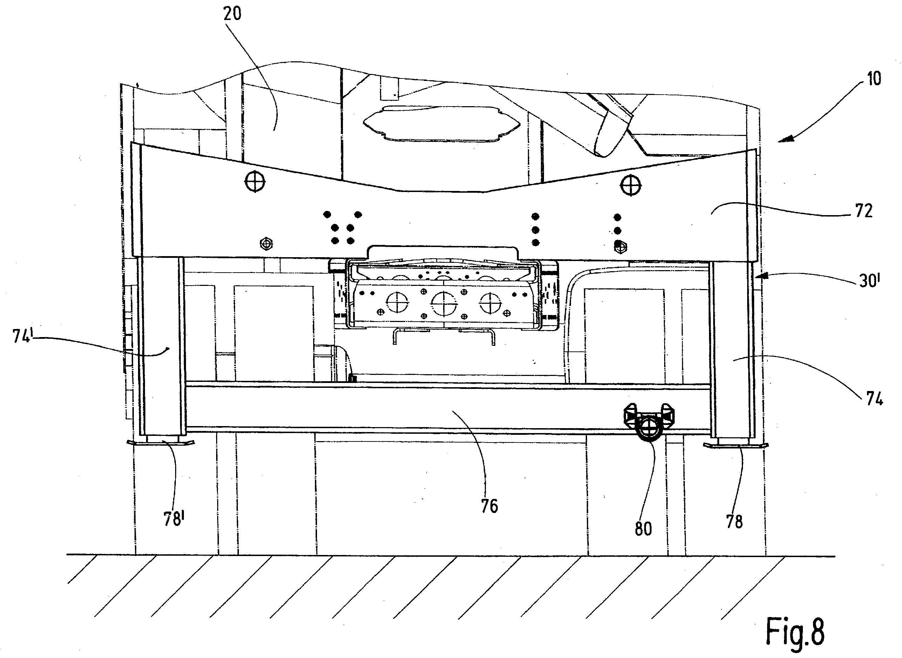

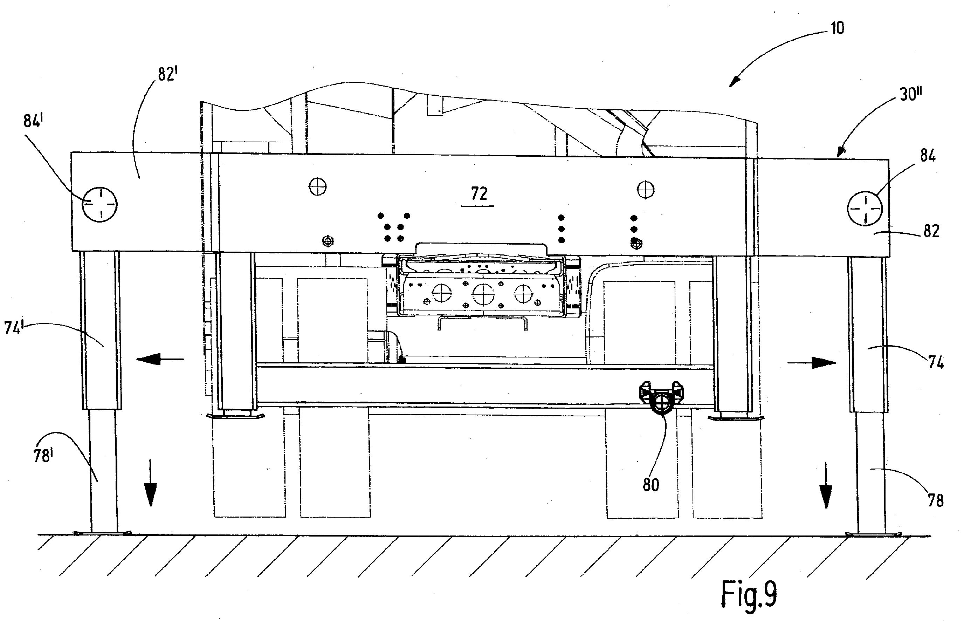

Die Fig. 7 bis 9 zeigen ausschnittsweise eine Heckansicht der Fahrmischerpumpe 10 mit drei Varianten der in den hinteren Trommelauflagerbock 20 integrierten Abstützeinrichtung, wobei die in Fig. 7 gezeigte Abstützeinrichtung 30 der in Fig. 6 dargestellten entspricht. Die in Fig. 8 dargestellte Abstützeinrichtung 30' ist der in Fig. 7 dargestellten funktionell vergleichbar, mit dem Unterschied, dass die Hülsenpartien 74, 74' hier senkrecht und nicht schräg in Bodenrichtung verlaufen. Die in Fig. 9 gezeigte Abstützeinrichtung 30" ist für größere Abstützbreiten bestimmt. Hierzu sind in dem Querträger 72 verschiebbare Teleskoporgane 82, 82' vergleichbar den vorderen Stützbeinen 40 (Fig. 2) angeordnet, an deren äußeren Enden die Hülsenpartien 74, 74' mit den senkrecht zum Boden ausfahrbaren Abstützelementen 78, 78' angeordnet sind. Eine Querverstrebung zwischen den Hülsenpartien ist hier naturgemäß nicht möglich, was durch eine entsprechend belastbarere Ausbildung des Querbalkens 72 und der Teleskoporgane 82, 82' kompensiert wird. An den Teleskoporganen 82, 82' sind weiterhin im Bereich der äußeren Enden Warn- oder Positionsleuchten 84, 84' angeordnet, die dort vor Beschädigung geschützt aber gut erkennbar sind. Die Leuchten können auch innenliegend angeordnet sein und durch Öffnungen in mehrere Richtungen, beispielsweise nach vorne, seitlich und nach hinten, abstrahlen.

### Bezugszeichenliste:

- 10: Fahrmischerpumpe
- 12: Fahrzeug
- 14: Chassis
- 16: Aufbaurahmen
- 18, 20: Trommelauflagerböcke
- 22: Mastbock
- 24: Mischertrommel
- 26: Betonverteilermast
- 28, 30, 30', 30": Abstützeinrichtungen
- 32: Mittelteil
- 34, 36: Längsholme
- 38: Durchbrechung
- 40: Stützbein
- 42: Stützfuß
- 44: Ausnehmung
- 45: Wassertank
- 46: Trommellager
- 48: Dickstoffpumpe
- 50: Materialaufgabebehälter
- 52, 54: Förderkolben
- 56: Trennstelle
- 57: Schraubbolzen
- 58: C-Profil
- 60, 62: Schenkel
- 64: Durchbrechung
- 66, 66': Verlängerungsstück
- 68, 68', 70, 70': Verbindungsstreben
- 72: Querbalken
- 74, 74': Hülsenpartie
- 76: Querstrebe
- 78, 78': Abstützelement
- 80: Abschleppöse
- 82, 82': Teleskoporgan
- 84, 84': Positionsleuchte

## Patentansprüche

1. Fahrmischerpumpe (10) mit einem Fahrzeugchassis (14) und einem auf dem Fahrzeugchassis angeordneten Fahrzeugaufbau, der einen Aufbaurahmen (16) und darauf angeordnet einen Mastbock (22) für einen Materialverteilermast (26), eine Mischertrommel (24) mit einem in Fahrtrichtung gesehen vorderen und einem hinteren Trommelauflagerbock (18, 20) sowie eine einen Motor und ein Getriebe aufweisende Antriebseinheit für die Mischertrommel (24) aufweist, wobei der Aufbaurahmen (16) als vorgefertigte Baueinheit einschließlich des Mastbocks (22) und der vorderen und hinteren Trommelauflagerböcke (18, 20) ausgebildet ist, **dadurch gekennzeichnet, dass** der Aufbaurahmen (16) ein sich zwischen dem Mastbock (22) und dem hinteren Trommelauflagerbock (20) erstreckendes Blechbiegeteil (32) aufweist, das überwiegend als einstückiges Blechbiegeteil ausgebildet ist und das zwei in Richtung des Fahrzeugchassis (14) weisende Längsholme (34, 36) zur Befestigung an dem Fahrzeugchassis aufweist.

2. Fahrmischerpumpe nach Anspruch 1, **dadurch gekennzeichnet, dass** die Längsholme (34, 36) des Blechbiegeteils (32) mit dem Fahrzeugchassis (14) verschraubt, vernietet oder verschweißt sind.

3. Fahrmischerpumpe nach Anspruch 1 oder 2, **dadurch gekennzeichnet, dass** die Längsholme (34, 36) des Blechbiegeteils (32) mit einer Vielzahl von in vorbestimmten Abständen angeordneten, ein Lochraster bildenden Durchbrechungen (38) versehen sind.

4. Fahrmischerpumpe nach einem der Ansprüche 1 bis 3, **dadurch gekennzeichnet, dass** der Aufbaurahmen (16) eine in den hinteren Trommelauflagerbock (20) integrierte Abstützeinrichtung (30, 30', 30") zur Abstützung der Fahrmischerpumpe (10) am Boden aufweist.

5. Fahrmischerpumpe nach Anspruch 4, **dadurch gekennzeichnet, dass** die Abstützeinrichtung (30, 30', 30") beidseitig zur Längsmittelachse des Fahrzeugs (12) jeweils eine Hülsenpartie (74, 74') und ein aus der Hülsenpartie teleskopierbares Abstützelement (78, 78') aufweist.

6. Fahrmischerpumpe nach Anspruch 5, **dadurch gekennzeichnet, dass** die Hülsenpartien (74, 74') bezüglich der Längsmittelachse des Fahrzeugs (12) in Bodenrichtung senkrecht oder schräg nach außen weisend angeordnet sind.

7. Fahrmischerpumpe nach Anspruch 5, **dadurch gekennzeichnet, dass** die Hülsenpartien (74, 74') an Teleskoporganen (82, 82') angeordnet sind, die in entgegengesetzten Richtungen seitlich aus der Abstützeinrichtung (30") ausfahrbar sind.

8. Fahrmischerpumpe nach einem der Ansprüche 5 bis 7, **dadurch gekennzeichnet, dass** die Abstützelemente (78, 78') und/oder die Teleskoporgane (82, 82') mit Hilfe von Hydraulikzylindern zwischen einer eingefahrenen Transportstellung und einer ausgefahrenen Abstützstellung bewegbar sind.

9. Fahrmischerpumpe nach einem der Ansprüche 1 bis 8, **dadurch gekennzeichnet, dass** der Aufbaurahmen (16) eine in den Mastbock (22) integrierte Abstützeinrichtung (28) zur Abstützung der Fahrmischerpumpe (10) am Boden aufweist.

10. Fahrmischerpumpe nach einem der Ansprüche 1 bis 9, **dadurch gekennzeichnet, dass** im Heckbereich des Fahrzeugchassis (14) eine als Rotorpumpe oder Kolbenpumpe mit längs oder quer zur Fahrzeuglängsachse ausgerichteten Förderzylindern (52, 54) ausgebildete Dickstoffpumpe (48) angeordnet ist.

11. Fahrmischerpumpe nach Anspruch 10, **dadurch gekennzeichnet, dass** der hintere Trommelauflagerbock (20) eine Durchtrittsöffnung für die Förderzylinder (52, 54) der als Kolbenpumpe ausgebildeten Dickstoffpumpe (48) aufweist.

12. Fahrmischerpumpe nach einem der Ansprüche 1 bis 11, **dadurch gekennzeichnet, dass** der Aufbaurahmen (16) aus einer Mehrzahl von miteinander verschweißten und/oder verschraubten Blechen, Blechbiegeteilen und/oder Metallprofilteilen gebildet ist.

13. Fahrmischerpumpe nach einem der Ansprüche 1 bis 12, **dadurch gekennzeichnet, dass** der Aufbaurahmen (16) eine zwischen dem Mastbock (22) und dem vorderen Trommelauflagerbock (18) angeordnete Trennstelle (56) aufweist.

14. Fahrmischerpumpe nach Anspruch 13, **dadurch gekennzeichnet, dass** die Trennstelle (56) zur Aufnahme eines eine Rahmenverlängerung bewirkenden Zwischenstücks (66, 66') vorbestimmter Länge ausgebildet ist.

15. Fahrmischerpumpe nach Anspruch 13, **dadurch gekennzeichnet, dass** die Trennstelle (56) als teleskopierbare, in vorbestimmten Abständen fixierbare Rahmenpartie ausgebildet ist.

## Claims

1. Truck mixer pump (10) having a vehicle chassis (14) and a vehicle body arranged on the vehicle chassis, which body comprises a body frame (16) and, arranged thereon, a boom bracket (22) for a material distributor boom (26), a mixer drum (24) having a front and a rear drum support bracket (18, 20), as seen in the direction of travel, and a drive unit (16), comprising a motor and a transmission, for the mixer drum (24), the body frame (16) being designed as a prefabricated unit including the boom bracket (22) and the front and rear drum support brackets (18, 20), **characterized in that** the body frame (16) comprises a bent sheet-metal part (32) which extends between the boom bracket (22) and the rear drum support bracket (20), is designed predominantly as an integral bent sheet-metal part and comprises two longitudinal members (34, 36), pointing towards the vehicle chassis (14), for fastening to the vehicle chassis.

2. Truck mixer pump according to claim 1, **characterized in that** the longitudinal members (34, 36) of the bent sheet-metal part (32) are screwed, riveted or welded to the vehicle chassis (14).

3. Truck mixer pump according to either claim 1 or claim 2, **characterized in that** the longitudinal members (34, 36) of the bent sheet-metal part (32) are provided with a plurality of openings (38) arranged at predetermined spacings and forming a grid of holes.

4. Truck mixer pump according to any of claims 1 to 3, **characterized in that** the body frame (16) comprises a support device (30, 30', 30") integrated in the rear drum support bracket (20) for supporting the truck mixer pump (10) on the ground.

5. Truck mixer pump according to claim 4, **characterized in that** the support device (30, 30', 30") comprises a sleeve part (74, 74') and a support element (78, 78'), which can telescope out of the sleeve part, on each side with respect to the longitudinal central axis of the vehicle (12).

6. Truck mixer pump according to claim 5, **characterized in that** the sleeve parts (74, 74') are arranged facing outwards perpendicularly or obliquely with respect to the longitudinal central axis of the vehicle (12) towards the ground.

7. Truck mixer pump according to claim 5, **characterized in that** the sleeve parts (74, 74') are arranged on telescopic members (82, 82') which can be laterally extended in opposite directions out of the support device (30").

8. Truck mixer pump according to one of claims 5 to 7, **characterized in that** the support elements (78, 78') and/or the telescopic members (82, 82') can be moved between a retracted transport position and an extended support position by means of hydraulic cylinders.

9. Truck mixer pump according to any of claims 1 to 8, **characterized in that** the body frame (16) comprises a support device (28) integrated in the boom bracket (22) for supporting the truck mixer pump (10) on the ground.

10. Truck mixer pump according to any of claims 1 to 9, **characterized in that** a thick matter pump (48) which is designed as a rotor pump or piston pump having conveying cylinders (52, 54) oriented longitudinally or transversely with respect to the vehicle longitudinal axis is arranged in the rear region of the vehicle chassis (14).

11. Truck mixer pump according to claim 10, **characterized in that** the rear drum support bracket (20) comprises a passage for the conveying cylinders (52, 54) of the thick matter pump (48) designed as a piston pump.

12. Truck mixer pump according to any of claims 1 to 11, **characterized in that** the body frame (16) is formed of a plurality of metal sheets, bent sheet-metal parts and/or metal profile parts which are welded and/or screwed together.

13. Truck mixer pump according to any of claims 1 to 12, **characterized in that** the body frame (16) comprises a separation point (56) arranged between the boom bracket (22) and the front drum support bracket (18).

14. Truck mixer pump according to claim 13, **characterized in that** the separation point (56) is designed for receiving an intermediate piece (66, 66') of a predetermined length which elongates the frame.

15. Truck mixer pump according to claim 13, **characterized in that** the separation point (56) is designed as a telescopic frame part that can be fixed at predetermined spacings.

## Revendications

1. Camion mixo-pompe (10) comprenant un châssis de véhicule (14) et une carrosserie de véhicule disposée sur le châssis de véhicule, qui présente un cadre de montage (16) et un chevalet de mât (22) disposé par-dessus destiné à un mât (26) distributeur de matériaux, un tambour mélangeur (24) comprenant un tréteau de tambour avant lorsqu'on regarde dans la direction de déplacement et un tréteau de tambour arrière (18, 20), de même qu'une unité d'entraînement pour le tambour mélangeur (24) présentant un moteur et une transmission ; dans lequel le cadre de montage (16) est réalisé sous la forme d'une unité de construction préfabriquée qui inclut le chevalet de mât (22) ainsi que les tréteaux de tambour avant et arrière (18, 20) ; **caractérisé en ce que** le cadre de montage (16) présente un élément en tôle pliée (32) s'étendant entre le chevalet de mât (22) et le tréteau de tambour arrière (20), qui est réalisé principalement sous la forme d'un élément en tôle pliée en une seule pièce et qui présente deux longerons (34, 36) orientés dans la direction du châssis (14) du véhicule, destinés à venir se fixer contre le châssis du véhicule,

2. Camion mixo-pompe selon la revendication 1, **caractérisé en ce que** les longerons (34, 36) de l'élément en tôle pliée (32) sont vissés, rivetés ou soudés au châssis (14) du véhicule.

3. Camion mixo-pompe selon la revendication 1 ou 2, **caractérisé en ce que** les longerons (34, 36) de l'élément en tôle pliée (32) sont munis d'une multitude de passages (38) disposés à des distances prédéfinies, en formant une trame de trous.

4. Camion mixo-pompe selon l'une quelconque des revendications 1 à 3, **caractérisé en ce que** le cadre de montage (16) présente un mécanisme procurant un appui (30, 30', 30") intégré dans le tréteau de tambour arrière (20), destiné à servir d'appui pour le camion mixo-pompe (10) sur le sol.

5. Camion mixo-pompe selon la revendication 4, **caractérisé en ce que** le mécanisme procurant un appui (30, 30', 30") présente, des deux côtés, par rapport à l'axe médian longitudinal du véhicule (12), respectivement une partie (74, 74') en forme de manchon et un élément procurant un appui (78, 78') apte à sortir de manière télescopique à l'extérieur de la partie en forme de manchon.

6. Camion mixo-pompe selon la revendication 5, **caractérisé en ce que** les parties (74, 74') en forme de manchons sont disposées, en étant orientées vers l'extérieur, perpendiculairement ou en inclinaison par rapport à l'axe médian longitudinal du véhicule (12) en direction du sol.

7. Camion mixo-pompe selon la revendication 5, **caractérisé en ce que** les parties (74, 74') en forme de manchons sont disposées contre des organes télescopiques (82, 82') qui peuvent être déployés dans des directions réciproquement opposées en position latérale à l'extérieur du mécanisme procurant un appui (30").

8. Camion mixo-pompe selon l'une quelconque des revendications 5 à 7, **caractérisé en ce que** les éléments procurant un appui (78, 78') et/ou les organes télescopiques (82, 82') sont mobiles à l'aide de cylindres hydrauliques entre une position de transport dans laquelle ils sont rentrés et une position procurant un appui dans laquelle ils sont sortis.

9. Camion mixo-pompe selon l'une quelconque des revendications 1 à 8, **caractérisé en ce que** le cadre de montage (16) présente un mécanisme (28) procurant un appui destiné à servir d'appui pour le camion mixo-pompe (10), intégré dans le tréteau de mât (22).

10. Camion mixo-pompe selon l'une quelconque des revendications 1 à 9, **caractérisé en ce que**, dans la partie arrière du châssis (14) du véhicule, est disposée une pompe (48) pour matières épaisses réalisée sous la forme d'une pompe à rotor ou d'une pompe à piston comprenant des cylindres de refoulement (52, 54) orientés en direction longitudinale ou en direction transversale par rapport à l'axe longitudinal du véhicule.

11. Camion mixo-pompe selon la revendication 10, **caractérisé en ce que** le tréteau de tambour arrière (20) présente une ouverture de passage pour les cylindres de refoulement (52, 54) de la pompe (48) pour matières épaisses réalisée sous la forme d'une pompe à piston.

12. Camion mixo-pompe selon l'une quelconque des revendications 1 à 11, **caractérisé en ce que** le cadre de montage (16) est réalisé à partir d'une multitude de tôles, d'éléments en tôle pliée et/ou d'éléments profilés en métal soudés et/ou vissés les uns aux autres.

13. Camion mixo-pompe selon l'une quelconque des revendications 1 à 12, **caractérisé en ce que** le cadre de montage (16) présente une zone de séparation (56) disposée entre le chevalet de mât (22) et le tréteau de tambour avant (18).

14. Camion mixo-pompe selon la revendication 13, **caractérisé en ce que** la zone de séparation (56) est réalisée pour la réception d'un élément intermédiaire (66, 66') possédant une longueur prédéfinie, qui entraîne un prolongement du cadre.

15. Camion mixo-pompe selon la revendication 13, **caractérisé en ce que** la zone de séparation (56) est réalisée sous la forme d'une partie télescopique de cadre, qui peut être fixée à des distances prédéfinies.
